# EUROPÄISCHE PATENTSCHRIFT

(11) **EP 2 707 211 B1**
(45) Veröffentlichungstag und Bekanntmachung des Hinweises auf die Patenterteilung: **26.01.2022**
(21) Anmeldenummer: 12721164.7
(22) Anmeldetag: 19.04.2012
(51) Int. Cl.: B30B 11/00, B30B 11/08, B30B 15/02

(54) **VERFAHREN ZUM BETRIEB EINER ANLAGE ZUR HERSTELLUNG VON TABLETTEN**
METHOD FOR OPERATING A PLANT FOR PRODUCING TABLETS
PROCÉDÉ DE FONCTIONNEMENT D'UNE INSTALLATION DE PRODUCTION DE COMPRIMÉS

(30) Priorität: 10.05.2011 DE 102011101288
(43) Veröffentlichungstag der Anmeldung: 19.03.2014
(73) Patentinhaber: Fette Compacting GmbH, 21493 Schwarzenbek (DE)
(72) Erfinder: LÜDEMANN, Stefan, 21035 Hamburg (DE); MEIER, Matthias, 21493 Schwarzenbek (DE)
(74) Vertreter: Hauck Patentanwaltspartnerschaft mbB
(86) Internationale Anmeldenummer: PCT/EP2012/001691
(87) Internationale Veröffentlichungsnummer: WO 2012/152375

(56) Entgegenhaltungen:
- EP-A1- 0 620 108
- DE-A1- 10 207 764
- DE-U1-202005 017 516
- JP-U- 58 125 697

## Beschreibung

Die Erfindung bezieht sich auf ein Verfahren zum Betrieb einer Anlage zur Herstellung von Tabletten nach Patentanspruch 1.

Eine Anlage zur Herstellung von Tabletten enthält typischerweise eine sogenannte Rundläuferpresse. Hauptbestandteil der Rundläuferpresse ist ein Rotor, der einen Satz von Unter- und Oberstempeln aufnimmt. Die Stempel wirken mit Matrizen in einer Matrizenscheibe des Rotors zusammen, wobei eine stationäre Befülleinrichtung Bohrungen der Matrizen nacheinander befüllt, bevor das eingefüllte Material mit Hilfe der Pressstempel verdichtet wird. Wenn nachfolgend und vorstehend der allgemeine Begriff "Rotor" verwendet wird, umfasst dieser auch das "Rotorpaket", d.h. diejenigen zum Rotor gehörenden Teile, die mit dem Rotor eine ein- und ausbaubare Einheit bilden. Dazu gehören zum Beispiel die Kurventräger für die Kurven, die die Stempel während der Rotordrehung steuern.

Die Steuerung des Betriebs und die Überwachung einer derartigen Rundläuferpresse findet mit einem Rechnersystem statt. Zu diesem Zweck enthält die Rundläuferpresse eine Reihe von Signalgebern, die zur Beschaffenheit, Anordnung und Funktion von Komponenten und Baugruppen der Presse Signale abgeben, die in dem Rechnersystem verarbeitet werden. Beispielsweise sind den Druckrollen Druckmessvorrichtungen zugeordnet, welche die maximale Presskraft und auch deren Verlauf ermitteln. Insgesamt enthält das Rechnersystem eine Bedien- und Steuerungssoftware zur Steuerung und Überwachung des Betriebs der Rundläuferpresse. Auf die Einzelheiten hierzu soll jedoch nicht weiter eingegangen werden. Die Kommunikation zwischen Rundläuferpresse und Rechnersystem erfolgt üblicherweise über eine drahtgebundene Signalverbindung, beispielsweise ein Kabel. Es ist jedoch auch eine kontaktlose bzw. drahtlose Übertragung von Daten möglich.

Aus DE 199 33 817 A1 ist für eine Presse bekannt geworden, dem Unter- und Oberwerkzeug einen Speicher zuzuordnen, der mit Hilfe eines Lesekopfes abgelesen werden kann. Mit Hilfe einer derartigen Anordnung kann zum Beispiel die Standzeit der Presswerkzeuge überwacht werden. Aus DE 199 20 377 A1 ist ein Kommunikationssystem von Aktoren und Sensoren an der Tablettiermaschine und einem Steuerungsrechner bekannt geworden. Die Kommunikation erfolgt über ein Bussystem.

Aus DE 102 07 764 B4 ist bekannt geworden, eine Mehrzahl von Komponenten und/oder Baugruppen der Rundläuferpresse mit einem Transponder zu versehen und in den Transpondern mindestens eine die Komponente und/oder die Baugruppe kennzeichnende Identifikationsnummer einzuspeichern. In dem Rechnersystem wird ein Komponenten- und/oder Baugruppenplan hinterlegt. Nach dem Zusammenbau der Tablettiermaschine werden die Transponder mit einem mit dem Rechnersystem verbundenen Lesekopf abgelesen. Die ausgelesenen Daten werden im Rechnersystem mit dem Komponenten- und/oder Baugruppenplan verglichen. Auf diese Weise ist es möglich, beim Zusammenbau einer Rundläuferpresse diesen automatisch zu überwachen.

Rotor bzw. Rotorpaket in Rundläuferpressen sind üblicherweise als Einheit ausbaubar, beispielsweise zum Reinigen der Presse. Außerdem können in einer Rundläuferpresse unterschiedliche Rotoren zum Einsatz kommen. So werden Produktionstypen unterschieden, z.B. ob Monoschicht-, Zweischicht- oder Dreischichttabletten hergestellt werden sollen. Je nach Produktionstyp ist die Bedienung und Steuerung der Rundläuferpresse unterschiedlich. Beim Einbau eines anderen Rotorpakets ist es bisher üblich, am Bedienterminal des Rechnersystems manuelle Eingaben vorzunehmen, mit welchen die Bedien- und Steuerungssoftware an den Rotortyp angepasst wird.

Die manuelle Eingabe von Informationen zum jeweiligen Rotortyp ist zeitaufwendig. Außerdem kann es zu einer Fehleingabe kommen, was zu einer Beschädigung oder Fehlfunktion der Tablettenpresse führt. Ein wichtiges Datum für die Kennzeichnung eines Rotortyps ist die Stationszahl, welche die Anzahl von Matrizen bzw. Matrizenbohrungen und Stempelpaare wiedergibt. Bei einer Falscheingabe der Stationszahl funktioniert die Aussortierung von Schlechttabletten nicht. Schlechttabletten gelangen in die Gutproduktion, und es kann dazu führen, dass eine vollständige Charge entsorgt werden muss, was naturgemäß nicht nur den Zeitaufwand vergrößert, sondern auch einen materiellen Schaden verursacht.

Aus DE 20 2005 017 516 U1 ist es bekannt, Teilen einer Rundläufer-Tablettiermaschine Transponder zuzuordnen, die Identifikationsdaten der Teile beinhalten und die ausgelesen werden können. Die ausgelesenen Informationen können einem Rechensystem der Rundläufer-Tablettiermaschine für eine Verifizierung zur Verfügung gestellt werden. Das Dokument DE 20 2005 017516 U1 offenbart auch ein Verfahren nach den Merkmalen des Oberbegriffs des Anspruchs 1.

Aus JP 58125697 A ist bekannt, einem Rotorpaket einer Rundläuferpresse Sensoren zuzuordnen, die wahlweise abgelesen werden können.

Der Erfindung liegt daher die Aufgabe zugrunde, ein Verfahren zum Betrieb einer Anlage zur Herstellung von Tabletten anzugeben, bei dem eine Anpassung der Bedien- und Steuerungssoftware im Rechnersystem an unterschiedliche Rotorpakete automatisch erfolgt.

Diese Aufgabe wird durch die Merkmale des Patentanspruchs 1 gelöst.

Bei dem erfindungsgemäßen Verfahren wird in ein Speicher- und Kommunikationsbauteil an den Rotorpaketen ein an den Rotortyp angepasster Datensatz eingespeichert. Vor Inbetriebnahme des Rotortyps wird der Datensatz ausgelesen und in das Rechnersystem eingespeichert zur automatischen Anpassung der Bedien- und Steuerungssoftware und Bedienoberfläche an den Rotortyp.

In einem Speicher des Rechnersystems werden z.B. tabellarisch für alle in der Rundläuferpresse einbaubaren, unterschiedlichen Rotorpakete deren spezifische, für den Betrieb notwendigen Daten gespeichert und diesen Kenndaten den Rotortypen zugeordnet. Vor Inbetriebnahme eines Rotors werden seine Kenndaten ausgelesen, und im Rechnersystem werden die zugeordneten Betriebs- und Bediendaten aus dem Rechnerspeicher ausgegeben zur Übernahme in die Steuerungs- und Bediensoftware. Nach einer Ausgestaltung der Erfindung erfolgt das Auslesen des Datensatzes, wenn sich der Rotor außerhalb der Rundläuferpresse befindet. Alternativ kann vorgesehen werden, dass das Auslesen des Datensatzes erfolgt, wenn sich der Rotor in der Rundläuferpresse befindet.

Nach einer weiteren Ausgestaltung der Erfindung erfolgt die Datenübertragung vom Speicher- und Kommunikationsbauteil zum Rechnersystem und umgekehrt kontaktlos bzw. drahtlos. Naturgemäß kann sie auch kontaktbehaftet bzw. drahtgebunden über eine Steckverbindung erfolgen. Eine derartige Steckverbindung ist naturgemäß nur vorübergehend für den Zeitraum der Datenübertragung erforderlich und wird aufgehoben, sobald der Rotor in die Maschine eingebaut wird bzw. bevor die Tablettenpresse in Betrieb gesetzt wird, wenn das Kommunikationsbauteil auf einem drehenden Teil des Rotors bzw. -pakets angeordnet ist. Befindet es sich z.B. auf dem Kurventräger, kann die Kabelverbindung ständig aufrecht erhalten werden.

Das erfindungsgemäße Verfahren sieht in seiner allgemeinsten und umfassendsten Ausprägung vor, dass in dem Speicher- und Kommunikationsbauteil rotorspezifische Vorgabe- und Betriebs- und Überwachungsdaten und eventuell rotorspezifische Identifikationsdaten hinterlegt sind. Die vorstehende Klassifikation soll nur als grober Ordnungsrahmen dienen; sie ist nicht allgemeinverbindlich definiert. Zu den Identifikationsdaten zählen zum Beispiel Angaben zum Rotortyp und seiner Zweckbestimmung. Zu den Vorgabedaten zählen z.B. die Standzeit, die Stationszahl, diverse Herstellerinformationen, Angaben zu realisierbaren Produktionstypen, Solldrehzahl und Angaben zur max. Presskraft. Betriebsdaten sind absolvierte und noch zu absolvierende Betriebsstunden, Informationen zum Lebenszyklus des Rotorpakets, Istdrehzahlen, Istpresskräfte, Istpresskraftverläufe. Fehlerdiagnosen, Ersatzteilbestellungen, Überwachung von Wartungsintervallen, um nur einige Beispiele zu nennen, werden mit Hilfe von Überwachungsdaten, vorzugsweise online oder über Teleservice, durchgeführt. Nachfolgen werden einige Ausgestaltungen der Erfindung näher konkretisiert.

Bei Modifikation der Bedien- und Steuerungssoftware im Rechnersystem in Anpassung an den einzusetzenden Rotortyp ist nicht automatisch gewährleistet, dass möglicherweise ein Rotor eingesetzt wird, der für die Rundläuferpresse nicht geeignet ist. Daher wird nach einer weiteren Ausgestaltung der Erfindung in das Speicher- und Kommunikationsbauteil der Rotortyp eingespeichert und die Bedien- und Steuerungssoftware ist so ausgelegt, dass ein falscher Rotor erkannt und angezeigt werden kann.

Nach einer weiteren Ausgestaltung der Erfindung werden in das Speicher- und Kommunikationsbauteil die Standzeit des Rotors und die Betriebsstunden des Rotors eingespeichert. Auf diese Weise können automatisch Wartungsintervalle eingehalten werden. Ferner kann festgestellt werden, wann eine Überholung oder Austausch des Rotors erforderlich ist, weil er das Ende seiner Standzeit erreicht hat.

Mit Hilfe des erfindungsgemäßen Verfahrens kann eine Reihe von Informationen zwischen Rotor und Rechnersystem ausgetauscht werden. So kann, wie bereits erwähnt, der Produktionstyp in das Speicher- und Kommunikationsbauteil eingespeichert werden, der grob die Bedienung und Steuerung der Tablettenpresse definiert. Der Rotortyp kann z.B. für Einschicht-, Zweischicht- oder Dreischichttabletten eingesetzt werden oder auch für eine Sonderproduktion von Tabletten. Durch Auslesen des Typs des Rotorpakets kann unter Umständen online und über Teleservice auf die Daten zugegriffen werden, um eine Fehlerdiagnose durchzuführen oder eine Ersatzteilbestellung. Ein weiteres wesentliches Datum eines Rotortyps ist seine Stationszahl. Bei Falscheingabe funktioniert die Aussortierung der Schlechttabletten nicht, d.h., es können Schlechttabletten in die Gutproduktion gelangen. Auch Sonderfigurationen eines Rotorpakets können automatisch erkannt und zur Anpassung der Bedien- und Steuerungssoftware verwendet werden. So kann zum Beispiel die maximale Rotordrehzahl, die maximale Presskraft usw. berücksichtigt werden.

Das erfindungsgemäße Verfahren ermöglicht eine automatische Erkennung des Rotortyps und eine automatische Anpassung der Steuerungs- und Bediensoftware und der Bedienoberfläche an diesen Rotortyp. Es verhindert, dass Mensch und Presse bei einem Rotorwechsel Schaden erleiden. Das erfindungsgemäße Verfahren ermöglicht die Speicherung, Aktualisierung und Auslesung von beliebigen Informationen zum Rotorpaket. Ein falscher Rotortyp wird erkannt.

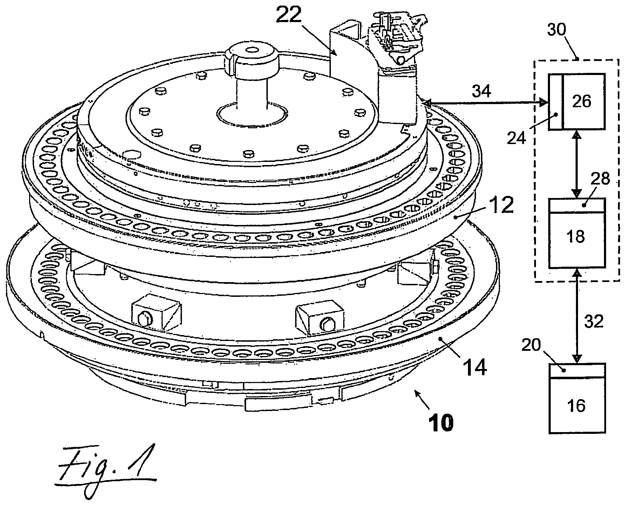

Die Erfindung soll nachfolgend anhand einer Zeichnung näher erläutert werden. Die einzige Figur zeigt perspektivisch ein Rotorpaket mit einem Blockschaltbild einer Anlage nach der Erfindung.

In der Figur ist ein Rotor bzw. ein Rotorpaket mit 10 bezeichnet. Es ist von bekanntem Aufbau. Man erkennt einen oberen Scheibenabschnitt 12 zur Aufnahme von nicht gezeigten Oberstempeln und einen unteren Scheibenabschnitt 14 zur Aufnahme von nicht gezeigten Unterstempeln. Eine dazwischen angeordnete Matrizenscheibe, beispielsweise in Form von einzelnen Segmenten mit Bohrungen zur Aufnahme von zu verpressendem Material, ist aus Darstellungsgründen fortgelassen. Oberhalb der oberen Stempelführung 12 befindet sich der Kurventräger 15 für die Kurven für die nicht gezeigten Oberstempel. Das gezeigte Rotorpaket 10 ist Bestandteil einer nicht detailliert gezeigten Rundläuferpresse zum Beispiel von bekanntem Aufbau und wird von einem entsprechenden Antrieb in Drehung versetzt. Auf den Betrieb der Rundläuferpresse soll im Einzelnen nicht eingegangen werden. Die Rundläuferpresse ist in der Figur als Block 16 dargestellt. Die Rundläuferpresse 16 wird von einem Rechnersystem 18 bedient, gesteuert und überwacht. Zu diesem Zweck weist die Rundläuferpresse 16 eine erste Schnittstelle 20 auf. Auf die Steuerung, Bedienung und Überwachung der Rundläuferpresse 16 soll jedoch im Einzelnen nicht eingegangen werden. Sie kann konventionell sein.

Auf dem Kurventräger des Rotorpakets 10 am Rand ist ein Speicher- und Kommunikationsbauteil 22 fest angeordnet. Über seine nicht gezeigte Schnittstelle kann es mit einer zweiten Schnittstelle 24 eines Lese- und Schreibgeräts 26 kommunizieren, das seinerseits mit einer dritten Schnittstelle 28 des Rechnersystems 18 kommuniziert. Rechnersystem 18 und Lese- und Schreibgerät 26 können eine Einheit bilden, wie durch den gestrichelt gezeichneten Kasten 30 angedeutet. Eine zweite Kommunikationsstrecke 34 zwischen Speicher- und Kommunikationsbauteil 22 und Lese- und Schreibgerät 26 kann kontaktlos bzw. drahtlos oder kontaktbehaftet sein. Im letzteren Fall ist eine Steckverbindung zwischen den Teilen vorgesehen. Die Kommunikation bzw. Datenübertragung zwischen Rechnersystem 18 und Rundläuferpresse 16 über eine erste Kommunikationsstrecke 32 kann ebenfalls kontaktlos bzw. drahtlos oder kontaktbehaftet sein, wie an sich bekannt.

Im Speicher- und Kommunikationsbauteil 22 kann eine Reihe von Daten, beispielsweise Identifikations-, Vorgabe- und/oder Betriebs- und/oder Überwachungs-Daten, die für den Rotortyp und seine Betriebsweise kennzeichnend sind, eingespeichert sein. Hierzu gehört z.B. der Produktionstyp (Einschicht-, Zweischicht- oder Dreischichtproduktion von Tabletten, Sonderproduktion, Stationszahl usw). Insgesamt definiert der Produktionstyp die Bedienung und Steuerung der Rundläuferpresse 16 über das Rechnersystem 18. Hierzu gehört zum Beispiel auch die Anzahl der Stationen des Rotorpakets 10. In dem Speicher- und Kommunikationsbauteil 22 können auch Standzeit und Betriebsstunden des Rotorpakets 10 eingespeichert werden, um Wartungsintervalle einzuhalten und Fehlfunktionen durch zu lange Wartungsintervalle oder Überschreiten der Standzeit zu verhindern. Auch Sonderkonfigurationen können eingespeichert sein, um automatisch zu erkennen, ob zum Beispiel die maximale Rotordrehzahl, maximale Presskraft usw. eingehalten werden.

Wesentlich ist, dass vor Inbetriebnahme des Rotorpakets 10 die im Speicher- und Kommunikationsbauteil 22 gespeicherten Daten ausgelesen und in einen Speicher des Rechnersystems 18 eingelesen werden, damit eine automatische Anpassung der Bedien- und Steuerungssoftware für die Rundläuferpresse 16 stattfindet, indem im Rechnersystem 18 die neu eingespeicherten Daten ausgelesen werden und die Steuerungs- und Bediensoftware automatisch auf den neuen Rotortyp eingestellt wird. Hierfür sind keinerlei manuelle Eingaben im Terminal des Rechnersystems 18 erforderlich. Die Umstellung der Steuerungs- und Bediensoftware kann daher fehlerfrei in kürzester Zeit vonstatten gehen.

## Patentansprüche

1. Verfahren zum Betrieb einer Anlage zur Herstellung von Tabletten, die mindestens eine Rundläuferpresse (16) und ein Rechnersystem (18) aufweist, wobei das Rechnersystem (18) eine Bedien- und Steuerungssoftware zur Steuerung und Überwachung des Betriebs der Rundläuferpresse (16) enthält und wobei die Rundläuferpresse (16) für den Einbau unterschiedlicher Typen von Rotoren (10) ausgelegt ist, **dadurch gekennzeichnet, dass** in ein Speicher- und Kommunikationsbauteil (22) an den Rotoren (10) ein an den jeweiligen Rotortyp angepasster Datensatz umfassend rotorspezifische Vorgabe- und Betriebs- und Überwachungsdaten eingespeichert wird und vor der Inbetriebnahme des Rotortyps der Datensatz ausgelesen und in das Rechnersystem (18) eingespeichert wird und das Rechnersystem (18) mit den Daten des Datensatzes die Bedien- und Steuerungssoftware an den Rotortyp anpasst.

2. Verfahren nach Anspruch 1, **dadurch gekennzeichnet, dass** das Auslesen des Datensatzes erfolgt, wenn sich der Rotor (10) außerhalb der Rundläuferpresse (16) befindet.

3. Verfahren nach Anspruch 1, **dadurch gekennzeichnet, dass** das Auslesen des Datensatzes erfolgt, wenn sich der Rotor (10) in der Rundläuferpresse (16) befindet.

4. Verfahren nach einem der Ansprüche 1 bis 3, **dadurch gekennzeichnet, dass** die Datenübertragung vom und zum Speicher- und Kommunikationsbauteil (22) kontaktlos erfolgt.

5. Verfahren nach einem der Ansprüche 1 bis 3, **dadurch gekennzeichnet, dass** die Datenübertragung vom und zum Speicher- und Kommunikationsbauteil (22) über eine drahtbehaftete Steckverbindung erfolgt.

6. Verfahren nach einem der Ansprüche 1 bis 5, **dadurch gekennzeichnet, dass** in dem Speicher- und Kommunikationsbauteil (22) weiterhin rotorspezifische Identifikationsdaten hinterlegt sind.

7. Verfahren nach einem der Ansprüche 1 bis 6, **dadurch gekennzeichnet, dass** in das Speicher- und Kommunikationsbauteil (22) eine Kennzeichnung für den Rotortyp eingespeichert wird und die Bedien- und Steuerungssoftware ausgelegt wird, einen falschen Rotor (10) zu erkennen und anzuzeigen.

8. Verfahren nach einem der Ansprüche 1 bis 7, **dadurch gekennzeichnet, dass** in das Speicher- und Kommunikationsbauteil (22) die Standzeit und die Betriebsstunden des Rotors (10) eingespeichert werden.

9. Verfahren nach einem der Ansprüche 1 bis 8, **dadurch gekennzeichnet, dass** Herstellerinformationen zum Rotor (10) in das Speicher- und Kommunikationsbauteil (22) eingespeichert werden.

## Claims

1. A method for operating a plant for producing tablets that has at least one rotary press (16) and one computer system (18), wherein the computer system (18) contains operating and control software for controlling and monitoring the operation of the rotary press (16), and wherein the rotary press (16) is designed for installing different types of rotors (10), **characterized in that** a record adapted to the respective rotor type, comprising rotor-specific instruction and operating and monitoring data, is saved in a memory and communication component (22) on the rotors (10), and before the rotor type is commissioned, the record is read out and saved in the computer system (18), and the computer system (18) adapts the operating and control software to the rotor type by means of the data of the record.

2. The method according to Claim 1, **characterized in that** the record is read out when the rotor (10) is located outside of the rotary press (16).

3. The method according to Claim 1, **characterized in that** the record is read out when the rotor (10) is located in the rotary press (16).

4. The method according to any one of Claims 1 to 3, **characterized in that** the data are transferred from and to the memory and communication component (22) free of contact.

5. The method according to any one of Claims 1 to 3, **characterized in that** the data are transferred from and to the memory and communication component (22) by means of a wired plug-in connection.

6. The method according to any one of Claims 1 to 5, **characterized in that** rotor-specific identification data are additionally stored in the memory and communication component (22)

7. The method according to any one of Claims 1 to 6, **characterized in that** a labeling for the rotor type is saved in the memory and communication component (22), and the operating and control software is designed to recognize and display an incorrect rotor (10).

8. The method according to any one of Claims 1 to 7, **characterized in that** the service life and operating hours of the rotor (10) are saved in the memory and communication component (22).

9. The method according to any one of Claims 1 to 8, **characterized in that** the manufacturer information regarding the rotor (10) is saved in the memory and communication component (22).

## Revendications

1. Procédé de fonctionnement d'une installation de fabrication de comprimés, laquelle présente au moins une presse rotative (16) et un système informatique (18), dans lequel le système informatique (18) contient un logiciel d'exploitation et de commande pour la commande et la surveillance du fonctionnement de la presse rotative (16) et dans lequel la presse rotative (16) est conçue pour l'intégration de différents types de rotors (10), **caractérisé en ce qu'**un jeu de données adapté au type de rotor respectif, comportant des données de consigne et de fonctionnement et de surveillance spécifiques au rotor, est enregistré dans un composant de mémoire et de communication (22) au niveau des rotors (10) et le jeu de données est lu avant la mise en route du type de rotor et enregistré dans le système informatique (18) et le système informatique (18) adapte le logiciel d'exploitation et de commande au type de rotor à l'aide des données du jeu de données.

2. Procédé selon la revendication 1, **caractérisé en ce que** la lecture du jeu de données est effectuée lorsque le rotor (10) se trouve à l'extérieur de la presse rotative (16).

3. Procédé selon la revendication 1, **caractérisé en ce que** la lecture du jeu de données est effectuée lorsque le rotor (10) se trouve dans la presse rotative (16).

4. Procédé selon l'une des revendications 1 à 3, **caractérisé en ce que** la transmission de données à partir du composant de mémoire et de communication (22) et vers celui-ci est effectuée sans contact.

5. Procédé selon l'une des revendications 1 à 3, **caractérisé en ce que** la transmission de données à partir du composant de mémoire et de communication (22) et vers celui-ci est effectuée par le biais d'une connexion enfichable filaire.

6. Procédé selon l'une des revendications 1 à 5, **caractérisé en ce que** des données d'identification spécifiques au rotor sont également stockées dans le composant de mémoire et de communication (22).

7. Procédé selon l'une des revendications 1 à 6, **caractérisé en ce qu'**une désignation pour le type de rotor est enregistrée dans le composant de mémoire et de communication (22) et le logiciel d'exploitation et de commande est conçu pour reconnaître et afficher un rotor (10) incorrect.

8. Procédé selon l'une des revendications 1 à 7, **caractérisé en ce que** la longévité et les heures de fonctionnement du rotor (10) sont enregistrées dans le composant de mémoire et de communication (22).

9. Procédé selon l'une des revendications 1 à 8, **caractérisé en ce que** des informations de constructeur concernant le rotor (10) sont enregistrées dans le composant de mémoire et de communication (22).
